# EUROPEAN PATENT APPLICATION

(11) **EP 0 805 183 A2**
(43) Date of publication of application: **05.11.1997**
(21) Application number: 97201288.4
(22) Date of filing: 02.05.1997
(51) Int. Cl.: C08L 67/06, C08K 3/36

(54) **Thixotropic unsaturated polyester resins**

(30) Priority: 04.05.1996 DE 19618015
(71) Applicant: DSM RESINS B.V., 8022 AW Zwolle (NL)
(72) Inventor: Allspach, Thomas, 67317 Altleiningen (DE); Schwäbisch, Hans, 76764 Rheinzabern (DE); Häberle, Karl, 67346 Speyer (DE)
(74) Representative: Dorrestijn, Antoon

(57) **Abstract**

The invention relates to thixotropic unsaturated polyester resins, the inorganic thixotropic agents and, as emulsifiers, a block copolymer of an unsaturated polyester and a polyalkylene oxide or a comb block copolymer of an α-olefin/maleic anhydride copolymer and a polyalkylene oxide.

## Description

The present invention relates to thixotropic unsaturated polyester resins which have a long shelf life and contain an ethylenically unsaturated polyester, styrene as comonomer, an inorganic thixotropic agent and an emulsifier.

In the production of fibre-reinforced shaped articles by the hand lay-up or spray-up process, it is necessary in many cases for the unsaturated polyester resins to have thixotropic flow behaviour. This ensures that the layers applied to vertical or inclined surfaces - for example gel coats or laminates - do not run off. Thanks to the thixotropic behaviour, the resins have low viscosity during processing (by pouring, pumping, brushing on, spraying or roll coating) in order to be able to impregnate the glass fibres thoroughly. After application, however, the viscosity increases to such an extent that the resin remains between the glass fibres and does not run away.

The main field of use for laminating resins which usually contain from 0.5 to 1.5% of thixotropic agent is in boat construction; gel coat resins on the other hand contain from 2 to 3% of thixotropic agent. They are used in boat construction, for the production of facade panels and for coating the inside of containers. A further field of use of thixotropic resins is button production, the achievement of certain colour effects being important.

The methods practised to date for introducing the thixotropic agent frequently result in a decrease in the thixotropic behaviour of the resins during storage. There has therefore been no lack of attempts to overcome these deficiencies in the case of thixotropic resins. The addition of ethylene glycol to a UP resin rendered thixotropic with finely divided silica increases the viscosity very substantially and improves the thixotropic behaviour. However, the thixotropic behaviour decreases sharply during storage of resins modified in this manner.

EP-A 640 654 describes thixotropic unsaturated polyester resins which contain a thixotropic agent and a block or graft copolymer of styrene or an acrylate and a polyalkylene ether as emulsifier. Although this gives polyester resins having improved stability of the thixotropic behaviour, the latter is still insufficient. Moreover, the process of this publication gives opaque cured products, which is undesirable.

It was therefore the object of the invention to develop thixotropic unsaturated polyester resins which on the one hand have stable thixotropic behaviour over a relatively long storage time and which on the other hand give transparent cured products.

This object is achieved, according to the invention, by adding resin containing
A. an unsaturated polyester,
B. styrene,
C. 0.05 to 5% by weight of an inorganic thixotropic agent and
D. 0.01 to 5% by weight, based on A+B, of a special polyalkylene ether block copolymer as emulsifier D.

The mixtures are preferably prepared at room temperature with the aid of high-speed stirrers, dissolvers or three-roll mills, the components C and D being introduced simultaneously or in succession in any desired order into the initially taken styrene resin (components A+B). The resins according to the invention immediately build up pronounced thixotropic behaviour which furthermore remains stable over a relatively long storage time.

The following may be stated in connection with the individual components:
A. Unsaturated polyesters
   Unsaturated polyesters A are the conventional condensates of polybasic, in particular dibasic, carboxylic acids and their esterifiable derivatives, in particular their anhydrides, and polyhydric, in particular dihydric, alcohols which optionally additionally contain radicals of monobasic carboxylic acids, or monohydric alcohols or radicals of hydroxycarboxylic acids, where at least a part of the radicals must have ethylenically unsaturated copolymerizable groups. Suitable polyhydric, dihydric, optionally unsaturated alcohols are the conventional alkanediols and oxaalkanediols having in particular acyclic groups, cyclic groups or both types of groups, such as, for example, ethylene glycol, 1,2-propylene glycol, 1,3-propanediol, 1,3-butylene glycol, 1,4-butanediol, 1,6-hexanediol, 2,2-dimethyl-1,3-propanediol, diethylene glycol, triethylene glycol, polyethylene glycol, dipropylene glycol, polypropylene glycol, 1,2-cyclohexanediol, 2,2-bis(p-hydroxycyclohexyl)propane, trimethylolpropane monoallyl ether or 1,4-butenediol. Ethylene glycol, propylene glycol, dipropylene glycol and mixtures thereof are preferred.
   Furthermore, monohydric or trihydric alcohols or alcohols having a higher functionality, such as, for example, ethylhexanol, fatty alcohols, benzyl alcohols, 1,2-di(allyloxy)propan-3-ol, glycerol, pentaerythritol or trimethylolpropane may be concomitantly used in minor amounts. Polyhydric, in particular dihydric, alcohols are generally reacted in stoichiometric or approximately stoichiometric amounts with polybasic, in particular dibasic, carboxylic acids or their condensable derivatives. Suitable carboxylic acids or their derivatives are dibasic olefinically unsaturated, preferably α,β-olefinically unsaturated, carboxylic acids, such as, for example, maleic acid, fumaric acid, chloromaleic acid, itaconic acid, citraconic acid, methyleneglutaric and mesaconic acid or their esters or preferably their anhydrides. Furthermore, the polyesters may additionally contain condensed units of other dibasic, unsaturated and/or saturated and aromatic carboxylic acids having a modifying action, such as, for example, succinic acid, glutaric acid, α-methylglutaric acid, adipic acid, sebacic acid, pimelic acid, phthalic anhydride, o-phthalic acid, isophthalic acid, terephthalic acid, dihydrophthalic acid, tetrahydrophthalic acid, tetrachlorophthalic acid, 3,6-endomethylene-1,2,3,6-tetrahydrophthalic acid, endomethylenetetrachlorophthalic acid or hexachloroendomethylenetetrahydrophthalic acid, as well as monobasic and tribasic carboxylic acids and carboxylic acids having higher basicity, such as, for example, ethylhexanoic acid, fatty acids, methacrylic acid, propionic acid, benzoic acid, 1,2,4-benzenetricarboxylic acid or 1,2,4,5-benzenetetracarboxylic acid. Maleic acid or its anhydride, fumaric acid and o-phthalic anhydride are preferably used.
   The molar ratio of unsaturated to saturated dicarboxylic acids is preferably between 1:0 and 1:2.5.
   Mixed unsaturated polyesters, including those which have only limited solubility in styrene and readily crystallize, may likewise advantageously be used.
   Such readily crystallizing unsaturated polyesters may be composed of, for example, fumaric acid, adipic acid, terephthalic acid, ethylene glycol, 1,4-butanediol, 1,6-hexanediol and neopentylglycol. Unsaturated polyesters having, preferably, terminal double bonds are also suitable.
   The unsaturated polyesters have acid numbers of 0.5 to 100, preferably of 2 to 50, and average molecular weights of about 800 to 6000, preferably of about 1000 to 4000.
   The amorphous and optionally crystallizable unsaturated polyesters are prepared from their starting components by continuous or batchwise processes, in general by melt condensation or condensation under azeotropic conditions at temperatures between 150 and 220°C.
   Unsaturated polyesters which are modified with cyclopentenyl or cyclohexenyl groups are also suitable.
   For the purposes of the invention, the term unsaturated polyester also includes vinyl esters. Vinyl esters are generally understood as meaning the reaction products of polyepoxides with unsaturated monocarboxylic acids, preferably methacrylic acid. These products, too, are dissolved in unsaturated monomers, preferably styrene. These resins are described, for example, in U.S. Patents 3 066 12 and 3 179 623, vinyl ester resins based on bisphenol A preferably being used. They are distinguished by high toughness and good resistance to chemicals in combination with limited heat distortion resistance. On the other hand, vinyl ester resins obtained from epoxy novolak resins and (meth)acrylic acid, as described, for example, in U.S. Patent 3 256 226, have higher heat distortion resistances but lower toughnesses.
   The group 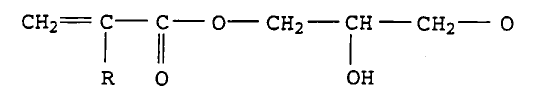 where R = H or CH₃ is characteristic of the class consisting of vinyl ester resins.
   Finally, vinyl ester urethanes are also suitable as unsaturated polyesters. They generally have the following groups:
   a) 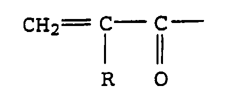 (where R = H or CH₃).
   b) 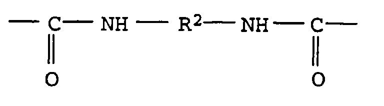 (where R² = divalent aliphatic, aromatic or cycloaliphatic radical having 4 to 40 C atoms, preferably an aromatic radical having 6 to 20 C atoms), optionally
   c)

      -O-R³-O-

      (where R⁴ = aliphatic, cycloaliphatic or aromatic radical having 2 to 100 C atoms).
   The vinyl ester urethane is preferably a reaction product of
   - a polyfunctional isocyanate,
   - optionally a polyhydric alcohol,
   - optionally a polyfunctional amine,
   - a hydroxyalkyl (meth)acrylate,
   in the reaction the weight ratio of isocyanate:(alcohol + amine) being between 100:0 and 100:300 and the ratio of the number of equivalents of hydroxyalkyl (meth)acrylate to the number of equivalents of free isocyanate groups of the reaction product being between 3:1 and 1:2.
B. Monomers The unsaturated polyester resins contain styrene as a monomer. The ratio of polyester:styrene is preferably between 20:80 and 90:10, in particular between 50:50 and 75:25. Styrene as a comonomer may be partly replaced by other conventional ethylenically polymerizable monomers, for example vinyl compounds, such as substituted styrenes, esters of acrylic and methacrylic acid or allyl compounds, such as diallyl phthalate.
C. Preferred thixotropic agent is finely divided silica, preferably having a primary particle size of 1 to 100 nm. Alumina and bentonite and mixtures thereof with silica are also suitable. The component C is contained in the resin in amounts of 0.05 to 5% by weight, in particular of 0.5 to 3% by weight, based on A+B.
D. According to the invention, the resin contains 0.05 to 1, preferably 0.1 to 2, % by weight of a polyalkylene oxide block copolymer as an emulsifier. This is either
   - D1): a block copolymer having at least one block of an unsaturated polyester and at least one block of a polyalkylene oxide or
   - D2): a comb block copolymer having a main block of an olefin/maleic anhydride copolymer and polyalkylene oxide side blocks.
   In both cases, the starting material used is a polyalkylene oxide which was prepared by homopolymerization of ethylene oxide, propylene oxide, butylene oxide, tetrahydrofuran, styrene oxide or epichlorohydrin, for example in the presence of BF₃, or by an addition reaction of these compounds, optionally as a mixture or in succession, with initiator components having reactive hydrogen atoms, such as monohydric or dihydric alcohols or amines. Polyethylene oxides or polyethylene-propylene oxides having a random or block structure and containing at least 20 mol % of ethylene oxide units are preferred. The molecular weights of the polyalkylene oxides are between 500 and 15,000 g/mol.
D1) The emulsifier D1 is preferably prepared by linking an unsaturated polyester carrying terminal hydroxyl groups via a polyisocyanate or a carboxylic polyanhydride to a polyalkylene oxide. The unsaturated polyester used may be the same as that described under A.
   For example, diisocyanates X (NCO)₂, where X represents an aliphatic hydrocarbon radical having 4 to 12 carbon atoms or a cycloaliphatic or aromatic hydrocarbon radical having 6 to 15 carbon atoms, may be mentioned as polyisocyanates.
   Examples of such diisocyanates are tetramethylene diisocyanate, hexamethylene diisocyanate, dodecamethylene diisocyanate, 1,4-diisocyanatocyclohexane, 3-isocyanatomethyl-3,5,5-trimethylcyclohexyl isocyanate (IPDI), 2,2-bis-4-isocyanatocyclohexylmethane, 2,2-bis-4-isocyanatocyclohexylpropane, trimethylhexane diisocyanate, 1,4-diisocyanatobenzene, 2,4-diisocyanatotoluene, 2,6-diisocyanatotoluene, 4,4'-diisocyanatodiphenylmethane (MDI), m-tetramethylxylylene diisocyanate, p-xylylene diisocyanate and mixtures consisting of these compounds. Polyisocyanates having a functionality higher than two may also be used. Isocyanates containing biuret, isocyanurate or allophanate groups or polynuclear homologs of MDI should be mentioned here.
   For example, pyromellitic dianhydride, cyclopentanetetarcarboxylic dianhydride, butanetetracarboxylic dianhydride, naphthalenetetracarboxylic dianhydride, benzophenonetetracarboxylic dianhydride or phenylsulfonylphenyltetracarboxylic dianhydride may also be used as carboxylic polyanhydrides.
   In a preferred preparation of the emulsifier D1, unsaturated polyesters and polyalkylene oxide containing OH groups are initially taken together, the ratios being chosen so that the number of OH groups from the polyester to the number of OH groups from the polyalkylene oxide, OH (ester)/OH (polyalkylene oxide) is from 3:1 to 1:3, preferably from 2:1 to 1:2, particularly preferably about 1:1.
   The mixture is homogenized, optionally with heating to not more than 100°C, and the polyisocyanate or a carboxylic polyanhydride is added in amounts such that the number of OH groups and the number of NCO groups or anhydride groups are in an OH/NCO or OH/anhydride ratio of from 3:1 to 1:3, preferably from 2:1 to 1:2, particularly preferably about 1:1. The reaction between the OH and the NCO or anhydride groups can optionally be accelerated by known catalysts, such as, for example, acids, bases or dibutyltin dilaurate. The reaction is carried out in such a way that the theoretically calculated NCO or anhydride content is roughly maintained.
   In principle, the thixotropic polyester resins according to the invention can also be obtained by producing the emulsifier in situ. For this purpose, a polyalkylene oxide is reacted with an excess, based on the OH groups, of polyisocyanate or polyanhydride to give a polyalkylene oxide carrying isocyanate or anhydride groups. This is added to the initially taken unsaturated polyester A, it being possible to add the components B and C simultaneously or in any desired order. The formation of the emulsifier can be accelerated by heating and/or by adding known catalysts.
D2) The emulsifier D2 is preferably prepared by reacting a maleic anhydride/α-olefin copolymer with a polyalkylene oxide. In principle, all known maleic anhydride/α-olefin copolymers are suitable, α-olefins having more than 8 C atoms, in particular C₁₂-C₁₄-α-olefins, being preferred. The copolymers can be prepared by the methods described, for example, in EP-A 412 389 or DE-A 37 30 885. They preferably have a molecular weight M_{w} of from 1000 to 20,000 g/mol. The polyalkylene oxide is used in an amount of from 10 to 100, preferably from 20 to 80, mol %, based on the anhydride groups. If the polyalkylene oxide is used in an amount of less than 100 mol %, based on the anhydride groups, the remaining anhydride groups should be reacted with monohydric alcohols in order to avoid crosslinking reactions. A reaction of the anhydride groups with amines to give amides or optionally imides is also possible. A reaction with methoxyethoxypropylamine is preferred. The resulting carboxyl groups can be further reacted with the stated amines or alcohols to give amides or esters.
In addition to the components C and D, the resins according to the invention may also contain further conventional additives, such as reinforcing fibres, for example glass fibres and carbon fibres; fillers, for example chalk, quartz or hydrated aluminium oxide; inhibitors such as, for example, hydroquinone; polyfunctional hydroxy compounds, for example ethylene glycol or trimethylolpropane; lubricants, such as, for example stearate; flameproofing agents, in particular halogen compounds; curing accelerators, for example cobalt complexes or aromatic amines; photoinitiators, such as benzoin ethers, benzil ketals or acylphosphine oxides.

The components C and D and optionally further additives are incorporated by stirring in, preferably with high-speed stirrers, the additives being dissolved, if possible, in styrene. The preferred cold-curable unsaturated polyester resins contain 0.01 to 5% by weight of a cobalt or amine accelerator; the required peroxides, for example methyl ethyl ketone peroxide or benzoyl peroxide, are added to the resin only shortly before curing. Photocurable resins contain 0.05 to 3% by weight of conventional photoinitiators.

The thixotropic unsaturated polyester resins according to the invention are preferably used where they are to be applied on vertical or inclined surfaces, for example in the production of glass fibre-reinforced plastics shaped articles by hand lay-up, injection moulding, pouring or brushing on.

The parts and percentages stated in the examples are based on weight.

### Examples

### UP resin A

An unsaturated polyester having a hydroxyl number of 30 was prepared by melt condensation from maleic anhydride, o-phthalic anhydride, propylene glycol and dipropylene glycol in a molar ratio of 1:0.5:0.8:0.75 and has an acid number of 20 and an average molecular weight of 2240 g/mol. The unsaturated polyester was dissolved in styrene to give a 67% strength solution and was stabilized with 100 ppm of hydroquinone.

### Thixotropic agent C

Finely divided silica (Aerosil 200, from Degussa), prepared from silicon tetrachloride by flame hydrolysis.

### Emulsifiers D

In each case a polyethylene oxide having a molecular weight of 9000 g/mol (Pluriol E 9000) was used as the polyalkylene oxide.

### D1a

100 g of Pluriol E 9000 and 300 g of UP resin A are heated to 60°C so that a clear melt forms. 0.1 g of dibutyltin dilaurate and, in the course of 30 minutes, 29 g of toluylene diisocyanate (80% of 2,4-isomer, 20% of 2,6-isomer) are added to this. After 90 minutes at 70°C, 200 g of UP resin A and 200 g of styrene are stirred in.

### D1b

100 g of Pluriol E 9000 and 300 g of UP resin A are heated to 80°C so that a clear melt forms. 34.9 g of benzene-1,2,4,5-tetracarboxylic anhydride are added to this. After 120 minutes at 100°C, 200 g of UP resin A and 200 g of styrene are stirred in.

### D2a

210 g (0.75 mol) of maleic anhydride/C_{12/14}-olefin copolymer (molecular weight M_{w} = 6000 g/mol) are dissolved in 500 g of xylene. 70.2 g (0.375 mol) of methoxyethoxypropylamine are added at 100°C and stirring is carried out for 60 minutes at 120°C. Thereafter, xylene and water of reaction are distilled off at 170°C, stirring is again carried out at 150°C and then 3375 g (0.375 mol) of Pluriol E 9000 are added. Stirring is then carried out for a further 180 minutes at 145 to 150°C. The product is poured into a steel tray and allowed to solidify.

500 g of the emulsifier and 0.125 g of hydroquinone are dissolved in 750 g of styrene.

### D2b

337.5 g (0.0375 mol) of Pluriol E 9000 and 7 g (0.0375 mol) of methoxyethoxypropylamine are stirred at 100°C; 21 g of maleic anhydride/C_{12/14}-olefin copolymer are added to this. Stirring is then carried out for 60 minutes at 100°C and for 180 minutes at 140 to 145°C.

### Example 1 (Preparation of the emulsifier D1 in situ)

0.03 g of benzoyl chloride is added to 400 g of Pluriol E 9000 and the mixture is melted at 100°C. 22.2 g of solid diphenylmethane diisocyanate are added to this and the mixture is stirred for 60 minutes at 100°C. The product is poured into a steel tray and allowed to solidify.

7.5 g of the isocyanate-modified polyethylene oxide are dissolved in 750 g of UP resin A at 70°C. 7.5 g of the thixotropic agent C are stirred into this solution.

## Claims

1. Thixotropic unsaturated polyester resins, containing
A. an unsaturated polyester,
B. styrene,
C. 0.05 to 5% by weight, based on A+B, of a thixotropic agent and
D. 0.01 to 5% by weight, based on A+B, of a polyalkylene oxide block copolymer as emulsifier,
characterized in that the emulsifier D is
1) a block copolymer having at least one block of an unsaturated polyester and at least one block of a polyalkylene oxide, or
2) a comb block copolymer having a main block of an α-olefin/maleic anhydride copolymer and polyalkylene oxide side blocks.

2. Polyester resins according to claim 1, characterized in that the emulsifier D1 was obtained by linking an unsaturated polyester carrying terminal hydroxyl groups via a polyisocyanate or a carboxylic polyanhydride to a polyalkylene oxide.

3. Polyester resins according to claim 1, characterized in that the emulsifier D2 was obtained by reacting a maleic anhydride/α-olefin copolymer with a polyalkylene oxide.

4. Polyester resins according to claim 1, characterized in that the component C is finely divided silica having a primary particle size of 1 to 100 nm.

5. Cold-curable polyester resin according to claim 1, characterized in that it contains 0.01 to 0.5% by weight of A+B, of a conventional cobalt or amine accelerator.

6. Cold-curable polyester resin according to claim 1, characterized in that it contains 0.05 to 3% by weight of a photoinitiator.

7. Use of the polyester resins according to claim 1 for the production of glass fibre-reinforced plastics shaped articles by hand lay-up, injection moulding, pouring or brushing.
